# EUROPEAN PATENT SPECIFICATION

(11) **EP 3 611 889 B1**
(45) Date of publication and mention of the grant of the patent: **03.03.2021**
(21) Application number: 19182881.3
(22) Date of filing: 28.06.2013
(51) Int. Cl.: H04L 12/925, H04L 29/08

(54) **SCHEDULED SERVICE PROCESSING METHOD AND APPARATUS**
VERFAHREN UND VORRICHTUNG ZUR PLANMÄSSIGEN DIENSTVERARBEITUNG
PROCÉDÉ ET APPAREIL DE TRAITEMENT DE SERVICE PROGRAMMÉ

(43) Date of publication of application: 19.02.2020
(62) Divisional of application: 13887708.9
(73) Proprietor: Huawei Technologies Co., Ltd., Longgang District Shenzhen Guangdong 518129 (CN)
(72) Inventor: ZHENG, Haomian, Shenzhen, Guangdong 518129 (CN); HAN, Jianrui, Shenzhen, Guangdong 518129 (CN); LIN, Yi, Shenzhen, Guangdong 518129 (CN)
(74) Representative: Pfenning, Meinig & Partner mbB

(56) References cited:
- EP-A1- 2 461 547
- CN-A- 101 207 630
- US-A1- 2013 144 973

## Description

### TECHNICAL FIELD

The present invention relates to communications technologies, and in particular, to a scheduled service processing method and an apparatus.

### BACKGROUND

A software-defined network (Software Defined Network, SDN for short) is a new type of innovative network architecture, which implements flexible control over network traffic by separating a control plane of a network device from a data plane. The SDN involves an application layer controller, a network layer controller, a transport network, and a network management system.

Transmission of a scheduled service is not started immediately when a service demand is generated; instead, transmission from one node to another node is completed in a specified time interval. In the prior art, when a network layer controller receives a scheduled service request from an application layer controller, the network layer controller calculates a transmission path according to a current network status when the service request is received, reserves a path resource, and notifies the application layer controller that transmission path calculation and path resource reservation are successful. When a specified service start time arrives, transmission of a scheduled service is started, and the network layer controller configures the path resource according to the calculated path to complete transmission.

Because both the path and the path resource that are used to transmit the scheduled service are an optimal path that is calculated by the network layer controller according to the current network status when the service request is received, when the specified service start time arrives, the network status may have already changed and a preferred path may appear, but transmission of the scheduled service is still completed according to the previously calculated path, the service is not transmitted by using the optimal path in a network, and a network resource is not used efficiently Prior art is shown in document US 2013/144973 A1.

### SUMMARY

The present invention is defined by the independent claims. Embodiments of the present invention provide a scheduled service processing method and an apparatus, to monitor a path resource in a network in real time, so that a path resource used to transport a scheduled service is optimal.

According to a first aspect, an embodiment of the present invention provides a scheduled service processing method, including:
within a time interval from t₁ to t₂, if a second transport path that can satisfy a service demand is acquired based on an available network resource, reserving the network resource for the second transport path, and reporting the second transport path to an application layer controller, so that the application layer controller can select one path between the second transport path and a first transport path as a new target transport path; and
receiving the new target transport path sent by the application layer controller, and executing transport of a service by using the new target transport path, where
t₁ is a time at which the application layer controller sends the service demand, t₂ is a time at which the service is started, and the first transport path is a target transport path that satisfies the service demand and that is acquired before the second transport path.

In a first possible implementation manner of the first aspect, after the receiving the new target transport path sent by the application layer controller, the method further includes:
releasing a network resource reserved for the transport path that is not selected as the new target transport path.

With reference to the first aspect or the first possible implementation manner of the first aspect, in a second possible implementation manner, the method further includes:
receiving the service demand that is sent by the application layer controller at the time t₁, where the service demand includes at least the time t₂ at which the service is started, a time t₃ at which the service is finished, a requested bandwidth resource, information about a source node, and information about at least one destination node; and
acquiring the first transport path that can satisfy the service demand, reserving a network resource for the first transport path, and reporting the first transport path to the application layer controller.

According to a second aspect, an embodiment of the present invention provides a scheduled service processing method, including:
sending a service demand to a network layer controller, and successively receiving a first transport path and a second transport path that can satisfy the service demand and that are reported by the network layer controller, where the first transport path is a target transport path that satisfies the service demand and that is acquired before the second transport path, and the second transport path is a path that can satisfy the service demand and that is acquired by the network layer controller within a time interval from t₁ to t₂, where t₁ is a time at which the service demand is sent, and t₂ is a time at which the service is started; and
selecting one of the second transport path and the first transport path as a new target transport path, and sending the new target transport path to the network layer controller.

In a first possible implementation manner of the second aspect, the service demand includes at least the time t₂ at which the service is started, a time t₃ at which the service is finished, a requested bandwidth resource, information about a source node, and information about at least one destination node.

According to a third aspect, an embodiment of the present invention provides a network layer controller, including:
a processing module, configured to: within a time interval from t₁ to t₂, if a second transport path that can satisfy a service demand is acquired based on an available network resource, reserve the network resource for the second transport path, and transport the service by using a new target transport path;
a sending module, configured to report the second transport path to an application layer controller, so that the application layer controller can select one path between the second transport path and a first transport path as the new target transport path; and
a receiving module, configured to receive the new target transport path sent by the application layer controller, where
t₁ is a time at which the application layer controller sends the service demand, t₂ is a time at which the service is started, and the first transport path is a target transport path that satisfies the service demand and that is acquired before the second transport path.

In a first possible implementation manner of the third aspect, the processing module is further configured to:
release a network resource reserved for the transport path that is not selected as the new target transport path.

With reference to the third aspect or the first possible implementation manner of the third aspect, in a second possible implementation manner, the receiving module is further configured to receive the service demand that is sent by the application layer controller at the time t₁, where the service demand includes at least the time t₂ at which the service is started, a time t₃ at which the service is finished, a requested bandwidth resource, information about a source node, and information about at least one destination node; and
the processing module is further configured to acquire the first transport path that can satisfy the service demand, and reserve a network resource for the first transport path, and the sending module is further configured to report the first transport path to the application layer controller.

According to a fourth aspect, an embodiment of the present invention provides an application layer controller, including:
a sending module, configured to send a service demand to a network layer controller, and send a new target transport path to the network layer controller;
a receiving module, configured to successively receive a first transport path and a second transport path that can satisfy the service demand and that are reported by the network layer controller, where the first transport path is a target transport path that satisfies the service demand and that is acquired before the second transport path, and the second transport path is a path that can satisfy the service demand and that is acquired by the network layer controller within a time interval from t₁ to t₂, where t₁ is a time at which the service demand is sent, and t₂ is a time at which the service is started; and
a processing module, configured to select one path between the second transport path and the first transport path as the new target transport path.

In a first possible implementation manner of the fourth aspect, the service demand includes at least the time t₂ at which the service is started, a time t₃ at which the service is finished, a requested bandwidth resource, information about a source node, and information about at least one destination node.

According to a fifth aspect, an embodiment of the present invention provides a network layer controller, including:
a processor, configured to: within a time interval from t₁ to t₂, if a second transport path that can satisfy a service demand is acquired based on an available network resource, reserve the network resource for the second transport path, and transport the service by using a new target transport path;
a transmitter, configured to report the second transport path to an application layer controller, so that the application layer controller can select one path between the second transport path and a first transport path as the new target transport path; and
a receiver, configured to receive the new target transport path sent by the application layer controller, where
t₁ is a time at which the application layer controller sends the service demand, t₂ is a time at which the service is started, and the first transport path is a target transport path that satisfies the service demand and that is acquired before the second transport path.

According to a sixth aspect, an embodiment of the present invention provides an application layer controller, including:
a transmitter, configured to send a service demand to a network layer controller, and send a new target transport path to the network layer controller;
a receiver, configured to successively receive a first transport path and a second transport path that can satisfy the service demand and that are reported by the network layer controller, where the first transport path is a target transport path that satisfies the service demand and that is acquired before the second transport path, and the second transport path is a path that can satisfy the service demand and that is acquired by the network layer controller within a time interval from t₁ to t₂, where t₁ is a time at which the service demand is sent, and t₂ is a time at which the service is started; and
a processor, configured to select one path between the second transport path and the first transport path as the new target transport path.

According to a seventh aspect, an embodiment of the present invention provides a scheduled service processing system, where the system includes at least the network layer controller provided in the third aspect, the first possible implementation manner of the third aspect, or the second possible implementation manner of the third aspect in the present invention and the application layer controller provided in the fourth aspect or the first possible implementation manner of the fourth aspect in the present invention.

According to the scheduled service processing method and the apparatus that are provided in the embodiments of the present invention, within a time interval from t₁ to t₂, if a second transport path that can satisfy a service demand is acquired based on an available network resource, the network resource is reserved for the second transport path, and the second transport path is reported to an application layer controller, so that the application layer controller can select one path between the second transport path and a first transport path as a new target transport path; and the new target transport path sent by the application layer controller is received, and the service is transported according to the new target transport path, thereby implementing real-time monitoring of a path resource in a network, so that a path resource used to transport a scheduled service is optimal.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of composition of SDN according to an embodiment of the present invention;
FIG. 2 is a flowchart of Embodiment 1 of a scheduled service processing method according to the present invention;
FIG. 3 is a flowchart of Embodiment 2 of a scheduled service processing method according to the present invention;
FIG. 4 is a flowchart of Embodiment 3 of a scheduled service processing method according to the present invention;
FIG. 5 is a diagram of a network topology according to Embodiment 4 of the present invention;
FIG. 6 is a diagram of a network topology according to Embodiment 5 of the present invention;
FIG. 7 is a schematic structural diagram of Embodiment 1 of a network layer controller according to the present invention;
FIG. 8 is a schematic structural diagram of Embodiment 1 of an application layer controller according to the present invention;
FIG. 9 is a schematic structural diagram of Embodiment 2 of a network layer controller according to the present invention;
FIG. 10 is a schematic structural diagram of Embodiment 2 of an application layer controller according to the present invention; and
FIG. 11 is a schematic structural diagram of a scheduled service processing system according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

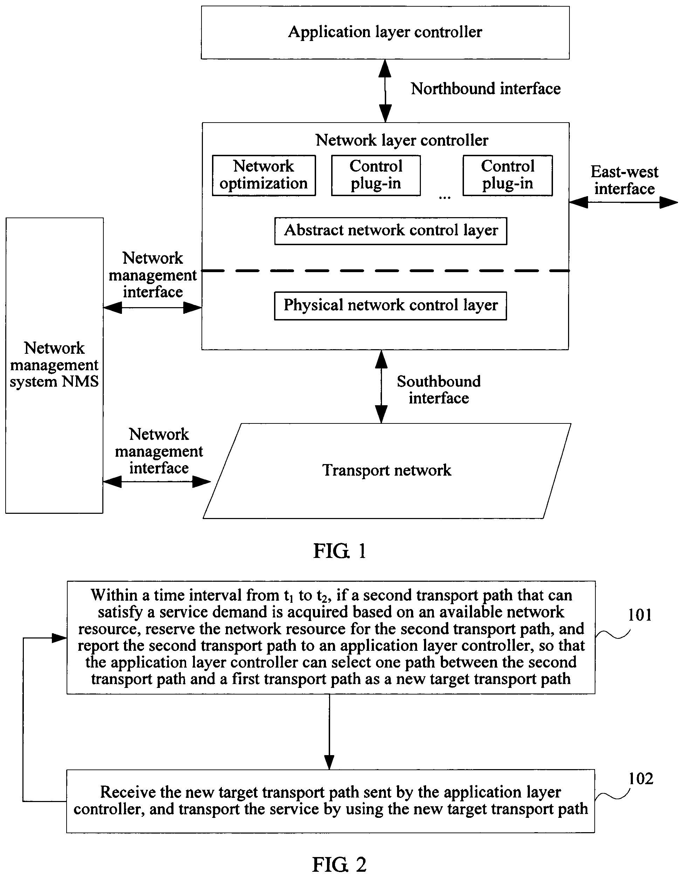

FIG. 1 is a schematic structural diagram of composition of SDN according to an embodiment of the present invention. As shown in FIG. 1, a scheduled service processing method provided in this embodiment of the present invention may be specifically implemented by a network optimization module, where the network optimization module is integrated into a network layer controller.

FIG. 2 is a flowchart of Embodiment 1 of a scheduled service processing method according to the present invention. As shown in FIG. 2, the method provided in this embodiment may be specifically implemented by a network layer controller, and the method may specifically include:
S101: Within a time interval from t₁ to t₂, if a second transport path that can satisfy a service demand is acquired based on an available network resource, reserve the network resource for the second transport path, and report the second transport path to an application layer controller, so that the application layer controller can select one path between the second transport path and a first transport path as a new target transport path.

t₁ is a time at which the application layer controller sends the service demand, t₂ is a time at which the service is started, and the first transport path is a target transport path that satisfies the service demand and that is acquired before the second transport path.

The available network resource is a network resource other than a network resource that has already been reserved. In this embodiment, the available network resource may be specifically a network resource other than a network resource reserved for the target transport path.

In an actual application process, the service demand may include the time t₂ at which the service is started, a time t₃ at which the service is finished, a requested bandwidth resource, information about a source node, and information about at least one destination node. The network layer controller may determine a transport path based on the available network resource and according to the bandwidth resource requested for completing transmission of the service within a time interval from t₂ to t₃ and the information about the source and destination nodes.

In this step, the second transport path may be a path that is different from the first transport path and that is better than the first transport path. Within the time interval from t₁ to t₂, the network layer controller may acquire, based on the available network resource, multiple second transport paths that can satisfy the service demand, and the network layer controller may report only a path that is better than a target transport path to the application layer controller. When the second transport path is reported to the application layer controller, a report message may carry the requested bandwidth resource and the specific path, and a person skilled in the art may understand that if the report message does not carry the specific path, the report message needs to carry information about a source node and information about a destination node. Optionally, the report message may further include latency information, jitter information, or information about a quantity of hops. A network parameter of the second transport path is better than that of the first transport path, for example, regarding the network parameter, the second transport path has less hops and/or shorter latency than the first transport path, which is not limited in this embodiment.

S102: Receive the new target transport path sent by the application layer controller, and transport the service by using the new target transport path.

Within the time interval from t₁ to t₂, if sensing that a resource on a transport path is released, the network layer controller performs S101 repeatedly until the time t₂ arrives, and executes service transport according to the target transport path.

According to the scheduled service processing method provided in this embodiment, within a time interval from t₁ to t₂, if a second transport path that can satisfy a service demand is acquired based on an available network resource, the network resource is reserved for the second transport path, and the second transport path is reported to an application layer controller, so that the application layer controller can select one path between the second transport path and a first transport path as a new target transport path; and the new target transport path sent by the application layer controller is received, and the service is transported by using the new target transport path, thereby implementing real-time monitoring of a path resource in a network, so that a path resource used to transport a scheduled service is optimal

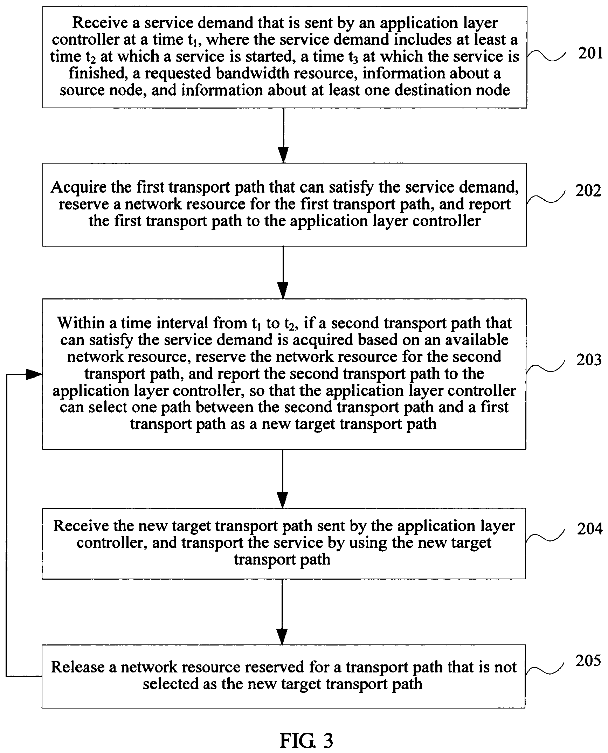

FIG. 3 is a flowchart of Embodiment 2 of a scheduled service processing method according to the present invention. As shown in FIG. 3, the method provided in this embodiment may be specifically implemented by a network layer controller, and the method may specifically include:
S201: Receive a service demand that is sent by an application layer controller at a time t₁, where the service demand includes at least a time t₂ at which a service is started, a time t₃ at which the service is finished, a requested bandwidth resource, information about a source node, and information about at least one destination node.

There is at least one service demand. When receiving multiple service demands, the network layer controller may successively acquire, according to a time at which the service demands are received, transport paths that can satisfy the service demands.

In this embodiment, the time t₁ is a time at which the application layer controller sends the service demand, the time t₂ is a time at which the service is started, the time t₃ is a time at which the service is finished, and a first transport path is a target transport path that satisfies the service demand and that is acquired by the network layer controller before a second transport path.

S202: Acquire the first transport path that can satisfy the service demand, reserve a network resource for the first transport path, and report the first transport path to the application layer controller.

A report message reported by the network layer controller to the application layer controller may include resource reservation success information and the specific path, and a person skilled in the art may understand that if the report message does not carry the specific path, the report message needs to carry information about a source node and information about a destination node.

S203: Within a time interval from t₁ to t₂, if a second transport path that can satisfy the service demand is acquired based on an available network resource, reserve the network resource for the second transport path, and report the second transport path to the application layer controller, so that the application layer controller can select one path between the second transport path and a first transport path as a new target transport path.

S204: Receive the new target transport path sent by the application layer controller, and transport the service by using the new target transport path.

Within the time interval from t₁ to t₂, if sensing that a resource on a transport path is released, the network layer controller performs S203 repeatedly until the time t₂ arrives, and executes service transport according to the target transport path.

S205: Release a network resource reserved for the transport path that is not selected as the new target transport path.

If the application layer controller selects the second transport path as the new target transport path, the network layer controller releases a network resource reserved for the first transport path; similarly, if the application layer controller selects the first transport path as the new target transport path, the network layer controller releases a network resource reserved for the second transport path.

According to the scheduled service processing method provided in this embodiment, a network layer controller receives a service demand that is sent by an application layer controller at a time t₁, acquires a first transport path that can satisfy the service demand, reports the first transport path to the application layer controller, and reserves a network resource for the first transport path; within a time interval from t₁ to t₂, when the network layer controller senses that a resource is released, if a second transport path that can satisfy the service demand is acquired based on an available network resource, the network layer controller reports the second transport path to the application layer controller, and reserves the network resource for the second transport path, so that the application layer controller can select one path the first transport path and the second transport path as a new target transport path; and after receiving the new target transport path sent by the application layer controller, the network layer controller releases a network resource reserved for the transport path that is not selected as the new target transport path, thereby implementing real-time monitoring of a path resource in a network, so that a path resource used to transport a scheduled service is optimal.

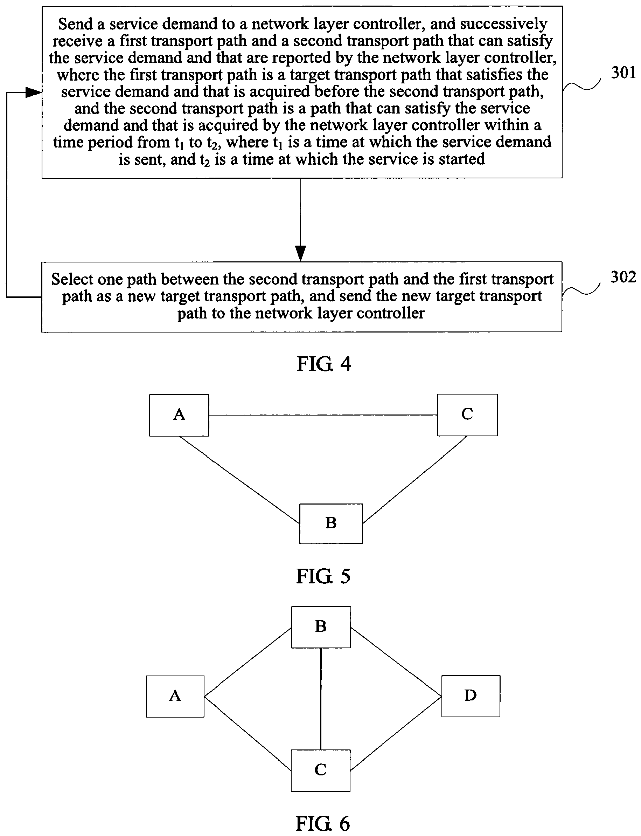

FIG. 4 is a flowchart of Embodiment 3 of a scheduled service processing method according to the present invention. As shown in FIG. 4, the method provided in this embodiment may be specifically implemented by an application layer controller, and the method may specifically include:

S301: Send a service demand to a network layer controller, and successively receive a first transport path and a second transport path that can satisfy the service demand and that are reported by the network layer controller, where the first transport path is a target transport path that satisfies the service demand and that is acquired before the second transport path, and the second transport path is a path that can satisfy the service demand and that is acquired by the network layer controller within a time interval from t₁ to t₂, where t₁ is a time at which the service demand is sent, and t₂ is a time at which the service is started.

S302: Select one path between the second transport path and the first transport path as a new target transport path, and send the new target transport path to the network layer controller.

The service demand includes at least the time t₂ at which the service is started, a time t₃ at which the service is finished, a requested bandwidth resource, information about a source node, and information about at least one destination node. When the application layer controller sends the selected new target transport path to the network layer controller, a form of a sent message may be: a number of a transport solution corresponding to the first transport path or the second transport path, acceptance or rejection of the second transport path, or specific information of the selected target transport path, such as information about a source node on the target transport path and information about a destination node on the target transport path or the specific path, which is not limited in this embodiment.

According to the scheduled service processing method provided in this embodiment, a service demand is sent to a network layer controller; a first transport path and a second transport path that can satisfy the service demand and that are reported by the network layer controller are successively received; and one of the second transport path and the first transport path is selected as a new target transport path, and the new target transport path is sent to the network layer controller, so that a path resource used to transport a scheduled service is optimal.

The scheduled service processing method provided in the present invention is described in detail in the following by using specific embodiments.

FIG. 5 is a diagram of a network topology according to Embodiment 4 of the present invention. It is assumed that an application scenario in this embodiment is: At a time t₁, an application layer controller generates a service demand: establishing a transport service from node A to node C within a time interval from t₂ to t₃. In this embodiment, a destination node is uniquely specified, that is, node C is specified as the destination node. As can be known from the network topology in FIG. 5, there are two transport paths from node A to node C, which are a preferred transport path A-C and a sub-optimal transport path A-B-C. It is assumed that at the time t₁, the transport path A-C is occupied.

In a specific implementation process, at the time t₁, the application layer controller generates a scheduled service demand, which requires that service transport from node A to node C is completed within the time interval from t₂ to t₃. The service demand is sent to a network layer controller via a northbound interface. The service demand includes information about a source node, information about a destination node, and a requested bandwidth resource, and should also include the time t₂ at which the service demand is started and the time t₃ at which the service demand is finished, that is, the service demand should not be started earlier than the time t₂, and should not be finished later than the time t₃.

Because the preferred transport path A-C is occupied, the network layer controller allocates, according to a network resource status at the time t₁, the transport path A-B-C to complete the service demand, that is, uses the transport path A-B-C as a first transport path, reports the first transport path to the application layer controller via the northbound interface, and reserves a network resource for the first transport path. The report message may include resource reservation success information, information about a source node, and information about a destination node; or the report message may include resource reservation success information and the specific path.

Within a time interval from t₁ to t₂, if the network layer controller senses that a resource on the transport path A-C is released, where it is assumed that the time is t', the network layer controller detects, by using a network optimization module, whether a preferred transport path exists for the service demand, that is, whether a new second transport path that can satisfy the service demand exists; if the preferred transport path exists, the network layer controller reports the preferred transport path to the application layer controller via the northbound interface, and reserves a network resource for the preferred transport path. The report message may include information about a source node, information about a destination node, and a requested bandwidth resource; or the report message may include a requested bandwidth resource and the specific path. Optionally, the report message may further include a network parameter such as a quantity of hops, latency, or jitter.

The application layer controller receives the preferred transport path sent by the network layer controller, and selects one of the sub-optimal transport path A-B-C and the preferred transport path A-C as a new target transport path, that is, the application layer controller determines whether to use the preferred transport path for transport, and sends the selected new target transport path to the network layer controller via the northbound interface. A format of a sent message may be: a number of a transport solution corresponding to the first transport path or the second transport path, acceptance or rejection of the preferred transport path, or specific information of the selected target transport path, such as information about a source node on the target transport path and information about a destination node or the specific path, which is not limited in this embodiment.

A network layer controller receives a new target transport path sent by an application layer controller, and releases a network resource reserved for the transport path that is not selected as the new target transport path; and within a time interval from t₁ to t₂, if sensing a resource on a transport path is released, the network layer controller executes the foregoing process repeatedly until the time t₂ arrives, and executes service transport according to the target transport path.

A person skilled in the art may understand that in this embodiment, communication between the application layer controller and the network layer controller via a northbound interface may be implemented by using the application layer traffic optimization (Application Layer Traffic Optimization, ALTO for short) protocol or the Openflow (Openflow) protocol, or communication may be implemented by using signaling or a message, which is not limited in this embodiment.

In this embodiment, within a time interval from t₁ to t₂, a network layer controller detects whether a preferred transport path exists; if the preferred transport path exists, the network layer controller sends the preferred transport path to an application layer controller via a northbound interface, so that the application layer controller can select one path between the preferred transport path and a sub-optimal transport path as a new target transport path, and sends the new target transport path to the network layer controller, so that a path resource used to transport a scheduled service is optimal.

FIG. 6 is a diagram of a network topology according to Embodiment 5 of the present invention. As shown in FIG. 6, it is assumed that a priority sequence of transport paths from node A to node C is: an optimal transport path A-C, a sub-optimal transport path A-B-C, and a worst transport path A-B-D-C; and it is assumed that a priority sequence of transport paths from node B to node C is: an optimal transport path B-C, a sub-optimal transport path B-A-C, and a worst transport path B-D-C. It is assumed that a network status at a time t₁ is: The transport path A-C is occupied, and the rest are idle transport paths. The following service demands are generated successively at the time t₁:
R₁: It is required that a transport time interval is t₂ to t₃, and that a service is transported from node A to node C; and
R2: It is required that a transport time interval is t₂ to t₃, and that a service is transported from node B to node C.

In a specific implementation process, at the time t₁, an application layer controller generates scheduled service demands R₁ and R₂, and sends R₁ and R₂ to a network layer controller via a northbound interface, where the service demands include information about source nodes, information about destination nodes, requested bandwidth resources, the time t₂ at which the service demands are started, and the time t₃ at which the service demands are finished; that is, the service demands should not be started earlier than the time t₂, and should not be finished later than the time t₃.

The network layer controller successively allocates a solution for R₁ and a solution for R₂ according to a network resource status at the time t₁. According to a current network resource condition, because the transport path A-C is occupied, a solution for R₁ is the sub-optimal transport path A-B-C, that is, the transport path A-B-C is used as a first transport path for R₁; because both the optimal transport path B-C and the sub-optimal transport path B-A-C are reserved for R₁ and cannot be used for R₂, a solution for R₂ is the worst transport path B-D-C, that is, the transport path B-D-C is used as a first transport path for R₂. The network layer controller reports the foregoing solutions to the application layer controller via the northbound interface, and separately reserves network resources for the first transport paths for R₁ and R₂. The report message may include resource reservation success information, information about a source node, and information about a destination node; or the report message may include resource reservation success information and the specific path.

In a time interval from t₁ to t₂, if the network layer controller senses that a resource on the transport path A-C is released, where it is assumed that the time is t', the network layer controller successively checks, by using a network optimization module, whether a preferred transport path for the service demand R1 and a preferred transport path for the service demand R2 exist, that is, whether new second transport paths that can satisfy the service demands exist; if the preferred transport paths exist, the network layer controller reports the preferred transport paths to the application layer controller via the northbound interface, and reserves network resources for the preferred transport paths. It is first detected that the preferred transport path A-C for R₁ exists; therefore, the network layer controller reports the preferred transport path to the application layer controller via the northbound interface, and reserves network resources of the transport path A-C and the transport path A-B-C. The report message may include information about a source node, information about a destination node, and a requested bandwidth resource; or the report message may include a requested bandwidth resource and the specific path. Optionally, the report message may further include a network parameter, such as a quantity of hops, latency, or jitter.

The application layer controller receives the preferred transport path, which is sent by the network layer controller, for R₁, and selects one of the sub-optimal transport path A-B-C and a preferred transport path A-C as a new target transport path, that is, the application layer controller determines whether to use the preferred transport path for transport; if determining to use the preferred transport path A-C for service transport, the application layer controller sends the selected preferred transport path A-C to the network layer controller via the northbound interface. A format of a sent message may be: a number of a transport solution corresponding to the first transport path or the second transport path, acceptance or rejection of the preferred transport path, or specific information of the selected target transport path, such as information about a source node on the target transport path and information about a destination node on the target transport path or the specific path, which is not limited in this embodiment.

The network layer controller receives the preferred transport path A-C, which is sent by the application layer controller, for R₁, and releases a resource that no longer needs to be reserved for the transport path A-B-C; when sensing that the network resource on the transport path A-B-C is released, the network optimization module in the network layer controller finds that a preferred transport path B-C for R₂ is required to appear; the network layer controller reports the preferred transport path to the application layer controller, and reserves a resource for the transport path B-C and a resource for the transport path B-D-C; the application layer controller receives the preferred transport path B-C sent by the network layer controller, determines to use the preferred path B-C for transport, and sends the selected preferred transport path B-C to the network layer controller via the northbound interface.

The network layer controller receives the preferred transport path B-C, which is sent by the application layer controller, for R₂, and releases a resource that no longer needs to be reserved for the transport path B-D-C; and within the time interval from t₁ to t₂, if sensing a resource on a transport path is released, the network layer controller executes the foregoing process repeatedly until the time t₂, and executes service transport according to the target transport path.

It should be noted that the foregoing processes for detecting whether preferred transport paths exist for R₁ and R₂ are independent from each other, and do not affect each other.

A person skilled in the art may understand that in this embodiment, communication between the application layer controller and the network layer controller via the northbound interface may be implemented by using the ALTO protocol or the Openflow protocol, or communication may be implemented by using signaling or a message, which is not limited in this embodiment.

In this embodiment, within a time interval from t₁ to t₂, a network layer controller detects whether a preferred transport path exists; if the preferred transport path exists, the network layer controller sends the preferred transport path to an application layer controller via a northbound interface, so that the application layer controller can select one path between the preferred transport path and a sub-optimal transport path as a new target transport path, and sends the new target transport path to the network layer controller, so that a path resource used to transport a scheduled service is optimal.

This embodiment is described by using a network topology same as that in Embodiment 5. As shown in FIG. 6, it is assumed that a network status at a time t₁ is: A transport path A-C is occupied, and the rest are idle transport paths. At the time t₁, a service demand is sent: establishing a transport service from node A to node C or from node A to node D within a time interval from t₂ to t₃.

In a specific implementation process, at the time t₁, an application layer controller generates a scheduled service demand, which requires that service transport from node A to node C or from node A to node D is completed from t₂ to t₃. The service demand is sent to a network layer controller via a northbound interface. The service demand includes information about a source node, information about a destination node, and a requested bandwidth resource, and should also include the time t₂ at which the service demand is started and the time t₃ at which the service demand is finished, that is, the service demand should not be started earlier than the time t₂, and should not be finished later than the time t₃.

Because the transport path A-C is occupied, the network layer controller selects, according to the network resource condition at the time t₁, another destination node D, and allocates a sub-optimal transport path A-B-D to complete the service demand, that is, uses the transport path A-B-D as a first transport path, reports the first transport path to the application layer controller via the northbound interface, and reserves a network resource for the transport path A-B-D. The report message may include resource reservation success information, information about a source node, and information about a destination node; or the report message may include resource reservation success information and the specific path.

Within a time interval from t₁ to t₂, if the network layer controller senses that a resource on the transport path A-C is released, where it is assumed that the time is t', the network layer controller checks, by using a network optimization module, whether a preferred transport path exists for the service demand, that is, whether a new second transport path that can satisfy the service demand exists, and if finding that the preferred transport path A-C exists, the network layer controller reports the preferred transport path A-C to the application layer controller via the northbound interface, and reserves a network resource for the preferred transport path A-C. The report message may include information about a source node, information about a destination node, and a requested bandwidth resource; or the report message may include a requested bandwidth resource and the specific path. Optionally, the report message may further include a network parameter such as a quantity of hops, latency, or jitter. The information about the destination node may be the same as or different from that reported at the time t₁.

The application layer controller receives the preferred transport path sent by the network layer controller, and selects one of the sub-optimal transport path A-B-D and the preferred transport path A-C as a new target transport path, that is, the application layer controller determines whether to use the preferred transport path for transport, and if selecting the preferred transport path A-C, the application layer controller sends the preferred transport path A-C to the network layer controller via the northbound interface. A format of a sent message may be: a number of a transport solution corresponding to the first transport path or the second transport path, acceptance or rejection of the preferred transport path, or specific information of the selected target transport path, such as information about a source node on the target transport path and information about a destination node on the target transport path or the specific path, which is not limited in this embodiment.

The network layer controller receives the preferred transport path A-C sent by the application layer controller, and releases the network resource reserved for the sub-optimal transport path A-B-D; and within the time interval from t₁ to t₂, if sensing a resource on a transport path is released, the network layer controller executes the foregoing process repeatedly until the time t₂, and executes service transport according to a target transport path.

A person skilled in the art may understand that in this embodiment, communication between the application layer controller and the network layer controller via the northbound interface may be implemented by using the ALTO protocol or the Openflow protocol, or communication may be implemented by using signaling or a message, which is not limited in this embodiment.

In this embodiment, within a time interval from t₁ to t₂, a network layer controller detects whether a preferred transport path exists; if the preferred transport path exists, the network layer controller sends the preferred transport path to an application layer controller via a northbound interface, so that the application layer controller can select one path between the preferred transport path and a sub-optimal transport path as a new target transport path, and sends the new target transport path to the network layer controller, so that a path resource used to transport a scheduled service is optimal.

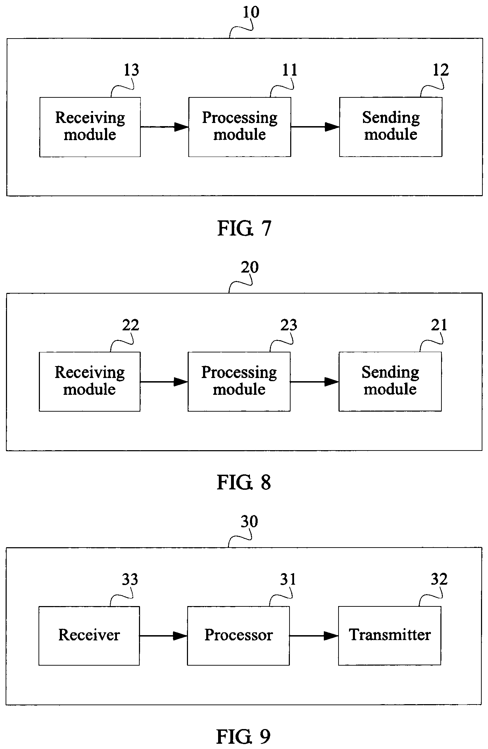

FIG. 7 is a schematic structural diagram of Embodiment 1 of a network layer controller according to the present invention. As shown in FIG. 7, the network layer controller 10 provided in this embodiment may include:
a processing module 11, configured to: within a time interval from t₁ to t₂, if a second transport path that can satisfy a service demand is acquired based on an available network resource, reserve the network resource for the second transport path, and transport the service by using a new target transport path;
a sending module 12, configured to report the second transport path to an application layer controller, so that the application layer controller can select one path between the second transport path and a first transport path as the new target transport path; and
a receiving module 13, configured to receive the new target transport path sent by the application layer controller, where
t₁ is a time at which the application layer controller sends the service demand, t₂ is a time at which the service is started, and the first transport path is a target transport path that satisfies the service demand and that is acquired before the second transport path.

When the processing module 11 reports the second transport path to the application layer controller, a report message may carry information about a source node, information about a destination node, and a requested bandwidth resource; or a report message carries a requested bandwidth resource and the specific path, and optionally, may further include latency, jitter, or a quantity of hops. A network parameter of the second transport path is better than that of the first transport path, for example, regarding the network parameter, the second transport path has less hops and/or shorter latency than the first transport path, which is not limited in this embodiment.

Within the time interval from t₁ to t₂, if sensing that a resource on a transport path is released, the network layer controller repeatedly detects whether there is a new second transport path that can satisfy the service demand until the time t₂ arrives, and executes service transport according to the target transport path.

The network layer controller provided in this embodiment may be configured to execute the technical solutions of the method embodiments. An implementation principle and a technical effect of the network layer controller are similar to those of the foregoing method embodiments, and details are not described herein.

FIG. 8 is a schematic structural diagram of Embodiment 1 of an application layer controller according to the present invention. As shown in FIG. 8, the application layer controller 20 provided in this embodiment may include:
a sending module 21, configured to send a service demand to a network layer controller, and send a new target transport path to the network layer controller;
a receiving module 22, configured to successively receive a first transport path and a second transport path that can satisfy the service demand and that are reported by the network layer controller, where the first transport path is a target transport path that satisfies the service demand and that is acquired before the second transport path, and the second transport path is a path that can satisfy the service demand and that is acquired by the network layer controller within a time interval from t₁ to t₂, where t₁ is a time at which the service demand is sent, and t₂ is a time at which the service is started; and
a processing module 23, configured to select one path between the second transport path and the first transport path as the new target transport path.

The service demand includes at least the time t₂ at which the service is started, a time t₃ at which the service is finished, a requested bandwidth resource, information about a source node, and information about at least one destination node. When the sending module 21 sends the selected new target transport path to the network layer controller, a form of a sent message may be: a number of a transport solution corresponding to the first transport path or the second transport path, acceptance or rejection of the second transport path, or specific information of the selected target transport path, such as information about a source node on the target transport path and information about a destination node on the target transport path or the specific path, which is not limited in this embodiment.

The application layer controller provided in this embodiment may be configured to execute the technical solutions of the method embodiments. An implementation principle and a technical effect of the network layer controller are similar to those of the foregoing method embodiments, and details are not described herein.

FIG. 9 is a schematic structural diagram of Embodiment 2 of a network layer controller according to the present invention. As shown in FIG. 9, the network layer controller 30 provided in this embodiment may include a processor 31, a transmitter 32, and a receiver 33.

The processor 31 is configured to: within a time interval from t₁ to t₂, if a second transport path that can satisfy a service demand is acquired based on an available network resource, reserve the network resource for the second transport path, and transport the service by using a new target transport path;
the transmitter 32 is configured to report the second transport path to an application layer controller, so that the application layer controller can select one path between the second transport path and a first transport path as the new target transport path; and
the receiver 33 is configured to receive the new target transport path sent by the application layer controller, where
t₁ is a time at which the application layer controller sends the service demand, t₂ is a time at which the service is started, and the first transport path is a target transport path that satisfies the service demand and that is acquired before the second transport path.

When the transmitter 32 reports the second transport path to the application layer controller, a report message may carry information about a source node, information about a destination node, and a requested bandwidth resource; or a report message carries a requested bandwidth resource and the specific path, and optionally, may further include latency, jitter, or a quantity of hops. A network parameter of the second transport path is better than that of the first transport path, for example, regarding the network parameter, the second transport path has less hops and/or shorter latency than the first transport path, which is not limited in this embodiment.

Within the time interval from t₁ to t₂, if sensing that a resource on a transport path is released, the network layer controller repeatedly detects whether there is a second transport path that can satisfy the service demand until the time t₂ arrives, and executes service transport according to the target transport path.

The network layer controller provided in this embodiment may be configured to execute the technical solutions of the method embodiments. An implementation principle and a technical effect of the network layer controller are similar to those of the foregoing method embodiments, and details are not described herein.

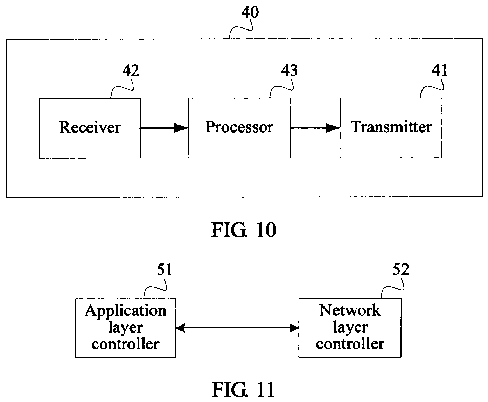

FIG. 10 is a schematic structural diagram of Embodiment 2 of an application layer controller according to the present invention. As shown in FIG 10, the application layer controller 40 provided in this embodiment may include a transmitter 41, a receiver 42, and a processor 43.

The transmitter 41 is configured to send a service demand to a network layer controller, and send a new target transport path to the network layer controller;
the receiver 42 is configured to successively receive a first transport path and a second transport path that can satisfy the service demand and that are reported by the network layer controller, where the first transport path is a target transport path that satisfies the service demand and that is acquired before the second transport path, and the second transport path is a path that can satisfy the service demand and that is acquired by the network layer controller within a time interval from t₁ to t₂, where t₁ is a time at which the service demand is sent, and t₂ is a time at which the service is started; and
the processor 43 is configured to select one path between the second transport path and the first transport path as the new target transport path.

The service demand includes at least the time t₂ at which the service is started, a time t₃ at which the service is finished, a requested bandwidth resource, information about a source node, and information about at least one destination node. When the transmitter 41 sends the selected new target transport path to the network layer controller, a form of a sent message may be: a number of a transport solution corresponding to the first transport path or the second transport path, acceptance or rejection of the second transport path, or specific information of the selected target transport path, such as information about a source node on the target transport path and information about a destination node on the target transport path or the specific path, which is not limited in this embodiment.

The application layer controller provided in this embodiment may be configured to execute the technical solutions of the method embodiments. An implementation principle and a technical effect of the network layer controller are similar to those of the foregoing method embodiment, and details are not described herein.

FIG. 11 is a schematic structural diagram of a scheduled service processing system according to the present invention. As shown in FIG 11, the scheduled service processing system provided in this embodiment includes: a network layer controller 52 and an application layer controller 51.

The network layer controller 52 includes a processing module, a sending module, and a receiving module. For specific content, refer to the processing module 11, the sending module 12, and the receiving module 13 in the network layer controller 10 in the foregoing embodiment, and details are not provided herein again.

The application layer controller 51 includes a processing module, a sending module, and a receiving module. For specific content, refer to the processing module 23, the sending module 21, and the receiving module 22 in the application layer controller 20 in the foregoing embodiment, and details are not provided herein again.

According to the scheduled service processing system provided in this embodiment, an application layer controller sends a scheduled service demand to a network layer controller; after receiving the scheduled service demand, the network layer controller reports a first transport path that can satisfy the service demand to the application layer controller; before the service demand is started, when the network layer controller senses that a resource is released, if the network layer controller can acquire a second transport path that satisfies the service demand, the network layer controller reports the second transport path to the application layer controller, so that the application layer controller selects a new target transport path and sends the new target transport path to the network layer controller; and after receiving the new target transport path, the network layer controller releases a network resource reserved for the transport path that is not selected as the new target transport path, thereby implementing real-time monitoring of a path resource in a network, so that a path resource used to transport a scheduled service is optimal.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor (processor) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing apparatus, refer to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A scheduled service processing method, comprising:
receiving a service demand of the scheduled service from an application layer controller;
reserving a network resource for a first transport path, wherein the first transport path satisfies the service demand;
before a starting time of the scheduled service, reserving a network resource for a second transport path after reserving the network resource for the first transport path, wherein the second transport path satisfies the service demand;
reporting the second transport path to the application layer controller;
receiving a target transport path from the application layer controller, wherein the target transport path is selected from the second transport path and the first transport path.

2. The method according to claim 1, wherein the method further comprises:
transporting the scheduled service by using the target transport path.

3. The method according to claim 2, wherein after the receiving the target transport path sent by the application layer controller, the method further comprises:
releasing a network resource reserved for the transport path that is not selected as the target transport path.

4. The method according to any one of claims 1-3, wherein the second transport path is better than the first transport path.

5. The method according to any one of claims 1-4, wherein the method comprises:
reporting the first transport path to the application layer controller.

6. A scheduled service processing method, comprising:
sending a service demand of the scheduled service to a network layer controller;
before a starting time of the scheduled service, receiving a first transport path and a second transport path that is reported by the network layer controller after sending the service demand; and
selecting a target transport path from the second transport path and the first transport path, wherein the first transport path is reserved before the second transport path is reserved, and the first transport path and the second transport path respectively satisfies the service demand.

7. The method according to claim 6, wherein the method comprises:
sending the target transport path to the network layer controller.

8. The method according to claim 6 or 7, wherein the second transport path is better than the first transport path.

9. A network layer controller, comprising:
a processing module, configured to: receive a service demand of the scheduled service from an application layer controller, reserve a network resource for a first transport path, wherein the first transport path satisfies the service demand; and
before a starting time of the scheduled service, reserve a network resource for a second transport path after reserving the network resource for the first transport path, wherein the second transport path satisfies the service demand;
a sending module, configured to report the second transport path to the application layer controller; and
a receiving module, configured to receive a target transport path sent by the application layer controller, wherein the target transport path is selected from the second transport path and the first transport path.

10. The network layer controller according to claim 9, wherein the network layer controller further comprises:
a transport module, configured to transport the scheduled service by using the target transport path .

11. The network layer controller according to claim 9 or 10, wherein the processing module is further configured to:
release a network resource reserved for a transport path that is not selected as the target transport path.

12. The network layer controller according to any one of claims 9-11, wherein the second transport path is better than the first transport path.

13. The network layer controller according to any one of claims 9-12, wherein the processing module is further configured to:
report the first transport path to the application layer controller.

14. An application layer controller, comprising:
a sending module, configured to send a service demand of the scheduled service to a network layer controller;
a receiving module, configured to receive a first transport path and a second transport path that is reported by the network layer controller before a starting time of the scheduled service and after sending the service demand; and
a processing module, configured to select a target transport path from the second transport path and the first transport path, wherein the first transport path is reserved before the second transport path is reserved, and the first transport path and the second transport path respectively satisfies the service demand.

15. The application layer controller according to claim 14, wherein the sending module is further configured to:
send the target transport path to the network layer controller.

16. The application layer controller according to claim 14, wherein the second transport path is better than the first transport path.

17. A scheduled service processing system, wherein the system comprises at least the network layer controller according to any one of claims 9-13 and the application layer controller according to any one of claims 14-16.

## Patentansprüche

1. Verfahren zur planmäßigen Dienstverarbeitung, umfassend:
Empfangen einer Dienstanforderung des planmäßigen Dienstes von einer Anwendungsschicht- Steuereinheit;
Reservieren einer Netzwerkressource für einen ersten Transportpfad, wobei der erste Transportpfad die Dienstanforderung erfüllt;
vor einer Startzeit des planmäßigen Dienstes, Reservieren einer Netzwerkressource für einen zweiten Transportpfad nach dem Reservieren der Netzwerkressource für den ersten Transportpfad, wobei der zweite Transportpfad die Dienstanforderung erfüllt;
Melden des zweiten Transportpfades an die Anwendungsschicht-Steuereinheit;
Empfangen eines Zieltransportpfads von der Anwendungsschicht-Steuereinheit, wobei der Zieltransportpfad aus dem zweiten Transportpfad und dem ersten Transportpfad ausgewählt wird.

2. Verfahren nach Anspruch 1, wobei das Verfahren ferner umfasst:
Transportieren des planmäßigen Dienstes unter Verwendung des Zieltransportpfads.

3. Verfahren nach Anspruch 2, wobei das Verfahren nach dem Empfangen des von der Anwendungsschicht-Steuereinheit gesendeten Zieltransportpfads ferner umfasst:
Freigeben einer Netzwerkressource, die für den Transportpfad reserviert ist, der nicht als der Zieltransportpfad ausgewählt ist.

4. Verfahren nach einem der Ansprüche 1 bis 3, wobei der zweite Transportpfad besser ist als der erste Transportpfad.

5. Verfahren nach einem der Ansprüche 1 bis 4, wobei das Verfahren umfasst:
Melden des ersten Transportpfads an die Anwendungsschicht-Steuereinheit.

6. Verfahren zur planmäßigen Dienstverarbeitung, umfassend:
Senden einer Dienstanforderung des planmäßigen Dienstes an eine Netzwerkschicht-Steuereinheit;
vor einer Startzeit des planmäßigen Dienstes, Empfangen eines ersten Transportpfads und eines zweiten Transportpfads, der von der Netzwerkschicht-Steuereinheit nach dem Senden der Dienstanforderung gemeldet wird; und
Auswählen eines Zieltransportpfads aus dem zweiten Transportpfad und dem ersten Transportpfad, wobei der erste Transportpfad reserviert wird, bevor der zweite Transportpfad reserviert wird, und der erste Transportpfad und der zweite Transportpfad jeweils die Dienstanforderung erfüllen.

7. Verfahren nach Anspruch 6, wobei das Verfahren umfasst:
Senden des Zieltransportpfads an die Netzwerkschicht-Steuereinheit.

8. Verfahren nach Anspruch 6 oder 7 wobei der zweite Transportpfad besser ist als der erste Transportpfad.

9. Netzwerkschicht-Steuereinheit, umfassend:
ein Verarbeitungsmodul, das konfiguriert ist, um: eine Dienstanforderung des planmäßigen Dienstes von einer Anwendungsschicht-Steuereinheit zu empfangen, eine Netzwerkressource für einen ersten Transportpfad zu reservieren, wobei der erste Transportpfad die Dienstanforderung erfüllt; und
vor einer Startzeit des planmäßigen Dienstes, eine Netzwerkressource für einen zweiten Transportpfad nach Reservieren der Netzwerkressource für den ersten Transportpfad zu reservieren, wobei der zweite Transportpfad die Dienstanforderung erfüllt;
ein Sendemodul, das konfiguriert ist, um den zweiten Transportpfad an die Anwendungsschicht-Steuereinheit zu melden; und
ein Empfangsmodul, das konfiguriert ist, um einen von der Anwendungsschicht-Steuereinheit gesendeten Zieltransportpfad zu empfangen, wobei der Zieltransportpfad aus dem zweiten Transportpfad und dem ersten Transportpfad ausgewählt wird.

10. Netzwerkschicht-Steuereinheit nach Anspruch 9, wobei die Netzwerkschicht-Steuereinheit ferner umfasst:
ein Transportmodul, das konfiguriert ist, um den planmäßigen Dienst unter Verwendung des Zieltransportpfads zu transportieren.

11. Netzwerkschicht-Steuereinheit nach Anspruch 9 oder 10, wobei das Verarbeitungsmodul ferner konfiguriert ist, um:
eine Netzwerkressource freizugeben, die für einen Transportpfad reserviert ist, der nicht als Zieltransportpfad ausgewählt ist.

12. Netzwerkschicht-Steuereinheit nach einem der Ansprüche 9 bis 11, wobei der zweite Transportpfad besser ist als der erste Transportpfad.

13. Netzwerkschicht-Steuereinheit nach einem der Ansprüche 9 bis 12, wobei das Verarbeitungsmodul ferner konfiguriert ist, um:
den ersten Transportpfad an die Anwendungsschicht-Steuereinheit zu melden.

14. Anwendungsschicht-Steuereinheit, umfassend:
ein Sendemodul, das konfiguriert ist, um eine Dienstanforderung des planmäßigen Dienstes an eine Netzwerkschicht-Steuereinheit zu senden;
ein Empfangsmodul, das konfiguriert ist, um einen ersten Transportpfad und einen zweiten Transportpfad zu empfangen, die von der Netzwerkschicht-Steuereinheit vor einer Startzeit des planmäßigen Dienstes und nach dem Senden der Dienstanforderung gemeldet werden; und
ein Verarbeitungsmodul, das konfiguriert ist, um einen Zieltransportpfad aus dem zweiten Transportpfad und dem ersten Transportpfad auszuwählen, wobei der erste Transportpfad reserviert wird, bevor der zweite Transportpfad reserviert wird, und der erste Transportpfad und der zweite Transportpfad jeweils die Dienstanforderung erfüllen.

15. Anwendungsschicht-Steuereinheit nach Anspruch 14, wobei das Sendemodul ferner konfiguriert ist, um:
den Zieltransportpfad an die Netzwerkschicht-Steuereinheit zu senden.

16. Anwendungsschicht-Steuereinheit nach Anspruch 14, wobei der zweite Transportpfad besser ist als der erste Transportpfad.

17. Planmäßiges Dienstverarbeitungssystem, wobei das System mindestens die Netzwerkschicht-Steuereinheit nach einem der Ansprüche 9 bis 13 und die Anwendungsschicht-Steuereinheit nach einem der Ansprüche 14 bis 16 umfasst.

## Revendications

1. Procédé de traitement de service programmé, comprenant de :
recevoir une demande de service du service programmé à partir d'un contrôleur de couche application ;
réserver une ressource de réseau pour un premier chemin de transport, dans lequel le premier chemin de transport satisfait la demande de service ;
avant un temps de début du service programmé, réserver une ressource de réseau pour un deuxième chemin de transport après avoir réservé la ressource de réseau pour le premier chemin de transport, dans lequel le deuxième chemin de transport satisfait la demande de service ;
signaler le deuxième chemin de transport au contrôleur de couche application ;
recevoir un chemin de transport cible à partir du contrôleur de couche application, dans lequel le chemin de transport cible est sélectionné parmi le deuxième chemin de transport et le premier chemin de transport.

2. Procédé selon la revendication 1, dans lequel le procédé comprend en outre : le transport du service programmé en utilisant le chemin de transport cible.

3. Procédé selon la revendication 2, dans lequel après la réception du chemin de transport cible envoyé par le contrôleur de couche application, le procédé comprend en outre de :
libérer une ressource de réseau réservée pour le chemin de transport qui n'est pas sélectionné comme chemin de transport cible.

4. Procédé selon l'une quelconque des revendications 1 à 3, dans lequel le deuxième chemin de transport est meilleur que le premier chemin de transport.

5. Procédé selon l'une quelconque des revendications 1 à 4, dans lequel le procédé comprend de :
signaler le premier chemin de transport au contrôleur de couche application.

6. Procédé de traitement de service programmé, comprenant de :
envoyer une demande de service du service programmé à un contrôleur de couche réseau ;
avant un temps de début du service programmé, recevoir un premier chemin de transport et un deuxième chemin de transport qui sont signalés par le contrôleur de couche réseau après l'envoi de la demande de service ; et
sélectionner un chemin de transport cible parmi le deuxième chemin de transport et le premier chemin de transport, dans lequel le premier chemin de transport est réservé avant que le deuxième chemin de transport soit réservé, et le premier chemin de transport et le deuxième chemin de transport satisfont respectivement la demande de service.

7. Procédé selon la revendication 6, dans lequel le procédé comprend de :
envoyer le chemin de transport cible au contrôleur de couche réseau.

8. Procédé selon la revendication 6 ou 7, dans lequel le deuxième chemin de transport est meilleur que le premier chemin de transport.

9. Contrôleur de couche réseau, comprenant :
un module de traitement, configuré pour : recevoir une demande de service du service programmé à partir d'un contrôleur de couche application, réserver une ressource de réseau pour un premier chemin de transport, dans lequel le premier chemin de transport satisfait la demande de service ; et
avant un temps de début du service programmé, réserver une ressource de réseau pour un deuxième chemin de transport après avoir réservé la ressource de réseau pour le premier chemin de transport, dans lequel le deuxième chemin de transport satisfait la demande de service ;
un module d'envoi, configuré pour signaler le deuxième chemin de transport au contrôleur de couche application ; et
un module de réception, configuré pour recevoir un chemin de transport cible envoyé par le contrôleur de couche application, dans lequel le chemin de transport cible est sélectionné parmi le deuxième chemin de transport et le premier chemin de transport.

10. Contrôleur de couche réseau selon la revendication 9, dans lequel le contrôleur de couche réseau comprend en outre :
un module de transport, configuré pour transporter le service programmé en utilisant le chemin de transport cible.

11. Contrôleur de couche réseau selon la revendication 9 ou 10, dans lequel le module de traitement est en outre configuré pour :
libérer une ressource de réseau réservée pour un chemin de transport qui n'est pas sélectionné comme chemin de transport cible.

12. Contrôleur de couche réseau selon l'une quelconque des revendications 9 à 11, dans lequel le deuxième chemin de transport est meilleur que le premier chemin de transport.

13. Contrôleur de couche réseau selon l'une quelconque des revendications 9 à 12, dans lequel le module de traitement est en outre configuré pour :
signaler le premier chemin de transport au contrôleur de couche application.

14. Contrôleur de couche application, comprenant :
un module d'envoi, configuré pour envoyer une demande de service du service programmé à un contrôleur de couche réseau ;
un module de réception, configuré pour recevoir un premier chemin de transport et un deuxième chemin de transport qui sont signalés par le contrôleur de couche réseau avant un temps de début du service programmé et après l'envoi de la demande de service ; et
un module de traitement, configuré pour sélectionner un chemin de transport cible parmi le deuxième chemin de transport et le premier chemin de transport, dans lequel le premier chemin de transport est réservé avant que le deuxième chemin de transport soit réservé, et le premier chemin de transport et le deuxième chemin de transport satisfont respectivement la demande de service.

15. Contrôleur de couche application selon la revendication 14, dans lequel le module d'envoi est en outre configuré pour :
envoyer le chemin de transport cible au contrôleur de couche réseau.

16. Contrôleur de couche application selon la revendication 14, dans lequel le deuxième chemin de transport est meilleur que le premier chemin de transport.

17. Système de traitement de service programmé, dans lequel le système comprend au moins le contrôleur de couche réseau selon l'une quelconque des revendications 9 à 13, et le contrôleur de couche application selon l'une quelconque des revendications 14 à 16.
